# EUROPEAN PATENT SPECIFICATION

(11) **EP 1 359 179 B1**
(45) Date of publication and mention of the grant of the patent: **31.05.2017**
(21) Application number: 01271411.9
(22) Date of filing: 17.12.2001
(51) Int. Cl.: C08G 69/16, C08G 69/18, C08G 69/04, C08G 69/14

(54) **POLYAMIDE PREPOLYMER, POLYAMIDE, AND PROCESSES FOR PRODUCING THESE**
POLYAMID-PREPOLYMER, POLYAMID UND VERFAHREN ZU DEREN HERSTELLUNG
PREPOLYMERE DE POLYAMIDE, POLYAMIDE, ET PROCEDES DE PRODUCTION CORRESPONDANTS

(30) Priority: 20.12.2000 JP 2000387936; 22.02.2001 JP 2001047247; 02.07.2001 JP 2001200787; 31.10.2001 JP 2001335901
(43) Date of publication of application: 05.11.2003
(73) Proprietor: TORAY INDUSTRIES, INC., Tokyo 103-8666 (JP)
(72) Inventor: TACHIBANA, Yasuto, 206, Toray Takemi-ryo, Nagoya-shi, Aichi 467-0043 (JP); NODA, Minoru, Tokai-shi, Aichi 476-0003 (JP); NISHIMURA, Toru, Nagoya-shi, Aichi 458-0826 (JP)
(74) Representative: Webster, Jeremy Mark
(86) International application number: PCT/JP2001/011030
(87) International publication number: WO 2002/050162

(56) References cited:
- WO-A1-99/10408
- JP-A- 2 024 322
- JP-A- 11 343 341
- JP-A- 51 149 397
- JP-A- 53 052 597
- JP-A- 53 071 196
- JP-B1- 45 025 519
- US-A- 4 539 391

## Description

### TECHNICAL FIELD

The present invention relates to a method of producing a polyamide prepolymer from a main starting material of caprolactam. More precisely, the invention relates to methods for producing a polyamide from a main starting material of caprolactam and which contains an extremely small amount of a cyclic oligomer after heat treatment for a predetermined time; to provide a polyamide that has a high degree of polymerization, a reduced unreacted caprolactam content and a reduced oligomer content at a time at which it has received heat history for melt polymerization for a predetermined period of time, and to an efficient and economic method for producing the polyamide not requiring too much energy.

### BACKGROUND ART

As having excellent properties, polyamide resin produced from an essential material of caprolactam is used for fibers for clothing and fibers for industrial applications. In addition, it is widely used as injection moldings in the field of automobiles, in the field of electric and electronic appliances, etc. , and also as extrusion films and oriented films essentially for food wrapping and packaging.

Polyamide resin essentially derived from caprolactam is generally produced by heating caprolactam in the presence of a small amount of water. The production method is a relatively simple process and is widely employed in the art. An outline of one popular polymerization method of producing polycapramide that is described in Polyamide Resin Handbook (edited by Osamu Fukumoto, Nikkan Kogyo Shinbun-sha), pp. 63-65 is mentioned below.

Caprolactam is melted, then fed into an atmospheric pressure polymerization column heated at about 260°C, left therein for about 10 hours, and thereafter jetted out of it through its bottoms as strands, which are then pelletized. Thus obtained, the polycapramide resin pellets contain the caprolactam monomer and oligomer resulting from polymerization equilibrium. Therefore, these are then fed into a hot water extraction column, in which they are extracted with countercurrent hot water that is fed into the tower through the bottom thereof, and thereafter taken out of the tower from its lower zone. Thus extracted, the pellets contain a large amount of water, and therefore dried in vacuum or in an inert gas atmosphere at about 100°C.

The polyamide thus produced through caprolactam polymerization contains the unreacted caprolactam and oligomer, and therefore, it is believed that the hot water extraction is indispensable for the polymer after polymerization. The hot water extraction requires much energy, and, in addition, the unreacted monomer lowers the polymer productivity. Therefore, it is desired to omit the step or shorten the time for the step.

For omitting the hot water extraction step, there is mentioned a method of processing the polymerized polyamide at a high temperature in a high vacuum while the polymer is still in melt, to thereby remove the unreacted caprolactam and oligomer (USP 3,558,567). However, especially the oligomer removal is difficult, and there are few cases of applying the method to practical polymer production.

Another approach to the object is to reduce the unreacted monomer and oligomer for shortening the time necessary for the hot water extraction step. In particular, it is desired to reduce the oligomer that is poorly soluble in water and is difficult to remove through extraction.

Specifically, for omitting the hot water extraction step or shortening the time for the step, the unreacted caprolactam and oligomer after polymerization must be reduced. Some examples have heretofore been proposed for reducing the unreacted caprolactam and oligomer.

For example, JP-A 59-164327 proposes a method of preparing a prepolymer of caprolactam through polymerization and then further polymerizing it under pressure to thereby reduce the oligomer and gel.

According to the method disclosed, caprolactam is pre-polymerized at 220 to 280°C, and then further polymerized under pressure at 240 to 290°C to thereby obtain a polyamide polymer having a reduced amount of oligomer and gel. The method is effective for reducing gel, but requires a relatively long time in prepolymerization. In addition, since the heat history in the method is large, the effect of oligomer reduction in the method is unsatisfactory.

On the other hand, JP-B 50-26594 discloses a method of lowering the polymerization temperature to reduce the oligomer amount.

The method disclosed comprises polymerizing caprolactam having a water content of at most 0.5% by weight, at a temperature that falls within a range of from the melting point of the polyamide to be produced to the melting point thereof + 20°C to thereby produce a polyamide resin of which the cyclic oligomer content is reduced. They say that they obtained a polyamide having a cyclic oligomer content of 0.9 % by weight according to the method. However, the polymerization time in the method is 30 hours and long, and the amount of the unreacted caprolactam is 15 % or more, or that is, the unreacted monomer is not reduced in the method. Specifically, the method is still problematic in that the polyamide yield is low and the productivity is low.

We, the present inventors have previously proposed a method of producing a polyamide resin having a reduced oligomer content through polymerization in the presence of a dicarboxylic acid and a diamine at a temperature not higher than the melting point of the polyamide to be produced, followed by heating the resulting polyamide resin under reduced pressure to remove caprolactam and oligomer, as in JP-A-11-343341. At present, however, it is desired to develop a polyamide having a further reduced content of unreacted material and oligomer, and to develop an efficient method of producing the polyamide.

Further methods for preparation of polycaprolactam are disclosed in US 4539391. In examples lactam is heated under pressure resulting in vaporization of water and formation of a prepolymer at the same time. JP-A-53-052597 also concerns a method for continuous polymerization of caprolactam which proceeds via a prepolymer product. Furthermore, WO99/10408 concerns a process for preparation of polyamide prepolymers in which the prepolymerization step is conducted at pressures between 1000 KPa and the system vapor pressure.

DE-A-2443566 (and GB-A-1516179) discloses a process in which the starting materials are heated until a conversion of at least 70% has been reached.

Regarding polyamide to be produced from a main starting material of caprolactam, no one has heretofore known a high-quality polyamide which is obtained within a predetermined melt polymerization time and has a high degree of polymerization and of which both the unreacted caprolactam content and the oligomer content are satisfactorily low, as so mentioned hereinabove. In addition, no one has also known an efficient method of producing a polyamide of which both the caprolactam content and the oligomer content are low.

Accordingly, an object of the present invention is to provide a polyamide which does not require hot water extraction or for which the time for hot water extraction may be shortened, and which is concretely characterized in that it can be obtained within a predetermined melt polymerization time, it has a high degree of polymerization and the unreacted caprolactam content and the oligomer content thereof are both low; and to provide an efficient method of producing the polyamide.

Accordingly, in a first aspect the present invention provides a method for producing a polyamide prepolymer, which method comprises heating an aqueous solution of caprolactam having a water content of from 2 to 20 % by weight, under pressure which is sufficient to prevent the water evaporation from the system and is between 0.111 and 6.08MPa, at a temperature of from 200 to 330°C for 1 to 30 minutes, to provide a polyamide prepolymer having an amino group content of at least 0.1 mmol/g and a cyclic oligomer content of at most 0.6 % by weight.

Embodiments of this aspect of the invention provide a polyamide prepolymer which has an amino group content of at least 0.15 mmol/g and a cyclic oligomer content of at most 0.4 % by weight.

Embodiments of this aspect of the invention also concern a method for producing the polyamide prepolymer which comprises the preliminary step of mixing an aqueous solution of caprolactam having a water content of from 2 to 20% by weight with from 0.05 to 5 mol%, relative to the caprolactam, of at least one component selected from dicarboxylic acids, diamines and their salts, followed by performing the said heating step on the resulting mixture.

A second aspect of the present invention provides a method for producing a polyamide that has caproamide units as the essential constitutive component and has a sulfuric acid-relative viscosity of at least 2.0, a caprolactam content of at most 15% by weight, an oligomer content of at most 1.8% by weight and a total content of cyclic di- to tetramers of at most 0.9% by weight; the method being characterized in that a polyamide prepolymer, which is obtained through heat treatment of an aqueous solution of caprolactam having a water content of from 2 to 20% by weight, under pressure which is sufficient to prevent the water evaporation from the system and is between 0.111 to 6.08 MPa, at a temperature of from 200 to 330°C for 1 to 30 minutes and has an amino group content of at least 0.1 mmol/g and a cyclic oligomer content of at most 0.6% by weight, is fed into a normal pressure polymerization device and is polymerized therein under such a controlled condition that the highest polymerization temperature is not higher than the melting point of the polyamide to be obtained + 10°C and the polymerization time is not longer than 20 hours.

In embodiments of this aspect of the invention, in the method of obtaining a polyamide prepolymer, an aqueous solution of caprolactam having a water content of from 2 to 20% by weight is mixed with from 0.05 to 5 mol%, relative to the caprolactam, of at least one component selected from dicarboxylic acids, diamines and their salts, followed by performing the heating step on the resulting mixture.

Further embodiments of the second aspect of the invention concern a method for producing the polyamide, the method being characterized in that each of the polyamide prepolymer and at most 5 mol%, relative to the caprolactam, of at least one additive selected from dicarboxylic acids, diamines and their salts are fed into a normal pressure polymerization device and polymerized therein under such a controlled condition that the highest polymerization temperature is not higher than the melting point of the polyamide to be obtained + 10°C and the polymerization time is not longer than 20 hours. Additional embodiments of the second aspect concern a method for producing the present polyamide, the method being characterized in that the polyamide prepolymer, which is obtained by mixing an aqueous solution of caprolactam having a water content of from 2 to 20% by weight with from 0.05 to 5 mol%, relative to the caprolactam, of at least one component selected from dicarboxylic acids, diamines and their salts, followed by heating the resulting mixture under pressure which is sufficient to prevent the water evaporation from the system and is between 0.111 to 6.08MPa at a temperature of from 200 to 330°C for 1 to 30 minutes, and which has an amino group content of at least 0.1 mmol/g and a cyclic oligomer content of at most 0.6% by weight, and at most 5mol%, relative to the caprolactam, of at least one additive selected from dicarboxylic acids, diamines and their salts are fed into a normal pressure polymerization device and polymerized therein under such a controlled condition that the highest polymerization temperature is not higher than the melting point of the polyamide to be obtained + 10°C and the polymerization time is not longer than 20 hours.

Thus the invention provides a process for producing a polyamide through melt polymerization of a starting material of the polyamide prepolymer for a polymerization time of not longer than 20 hours in accordance with the second aspect of the invention and which has the
following properties:
Relative viscosity measured in 98% sulfuric acid at 25°C at a concentration of O.Olg/ml: at least 2.0,
Caprolactam content: at most 15% by weight,
Oligomer content: at most 1.8% by weight,
Total content of cyclic di- to tetramers: at most 0.9% by weight.

### BRIEF DESCRIPTION OF THE DRAWING

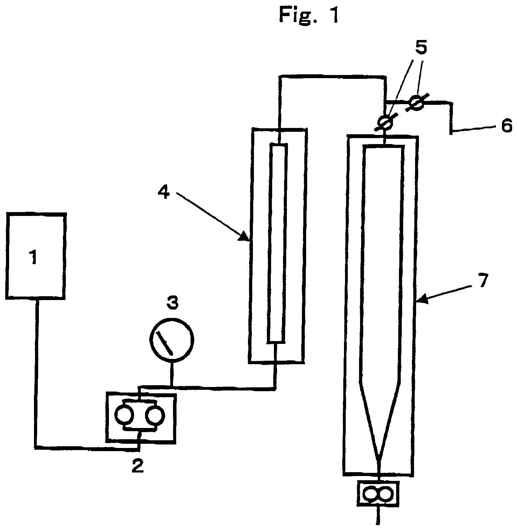

Fig. 1 is a schematic view of a polymerization reactor used in Examples, in which the numeral references have the following meanings.
- 1:: Starting Material Storage Tank
- 2:: Starting Material Feed Pump
- 3:: Pressure Gauge
- 4:: Pressure Heating Tank
- 5:: Pressure Control Valve
- 6:: Polyamide Prepolymer Take-out Mouth
- 7:: Atmospheric Pressure Continuous Polymerization Column

### MODES FOR CARRYING OUT THE INVENTION

The polyamide prepolymer as referred to herein is a composition obtained through heat treatment mentioned below of a starting material for polyamide, and it is a mixture comprising a polyamide linear oligomer, a cyclic oligomer, and an unreacted starting material.

The main starting material for polyamide, which is used in the method of the invention for producing the polyamide prepolymer or the polyamide, is essentially caprolactam. However, not detracting from the object of the invention, it may be combined with one or more other lactams and their derivatives within a range not overstepping 20 mol% of the overall amount of the starting material for polyamide. If the amount of the additional component is over 20 mol%, it will lower the crystallinity of the polyamide polymer obtained.

Examples of the additional lactams and their derivatives are valerolactam, enantholactam, capryllactam, undecalactam, laurolactam, etc. Of those, preferred are laurolactam, aminocaproic acid, aminoundecanoic acid and aminododecanoic acid.

In the method for producing the polyamide prepolymer in the invention, an aqueous solution of caprolactam is prepared. In this stage, the lowermost limit of the water content of the aqueous solution is 2 % by weight, preferably 2.4 % by weight, more preferably 3 % by weight of the total amount of the solution. The uppermost limit of the water content is 20 % by weight, preferably 17 % by weight, more preferably 15 % by weight of the total amount of the solution. If the water content oversteps the range of from 2 to 20 % by weight, the oligomer amount in the polyamide prepolymer will increase in order that the prepolymer may have the necessary amino group content, and the object of the invention could not be attained.

In the invention, the aqueous solution of caprolactam having a water content of from 2 to 20 % by weight may be mixed with at least one component selected from dicarboxylic acids, diamines and their salts.

Above all, preferred are dicarboxylic acids or diamines.

The dicarboxylic acids include, for example, aliphatic dicarboxylic acids such as oxalic acid, malonic acid, succinic acid, glutaric acid, adipic acid, pimelic acid, suberic acid, azelaic acid, sebacic acid, undecane-diacid, dodecane-diacid, brassylic acid, tetradecane-diacid, pentadecane-diacid, octadecane-diacid; alicyclic dicarboxylic acids such as cyclohexanedicarboxylic acid; and aromatic dicarboxylic acids such as phthalic acid, isophthalic acid, terephthalic acid, naphthalenedicarboxylic acid. Preferred are sebacic acid, adipic acid, terephthalic acid and isophthalic acid; and more preferred are adipic acid and terephthalic acid.

The diamines include, for example, aliphatic diamines such as ethylenediamine, 1,3-diaminopropane, 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoeicosane; alicyclic diamines such ascyclohexanediamine,bis(4-aminohexyl)methane; and aromatic diamines such as xylylenediamine. Of those, especially preferred are 1,4-diaminobutane, 1,6-diaminohexane and xylylenediamine.

For the salts of dicarboxylic acids and diamines, mentioned are the salts of the above-mentioned dicarboxylic acids and the above-mentioned diamines. Above all, preferred are a salt of adipic acid and 1,6- hexanediamine, and a salt of terephthalic acid and 1,6-hexanediamine.

Though not fully clarified as yet, at least one component selected from those dicarboxylic acids, diamines and their salts will be effective for reaction promotion. Therefore, when the component is added to the aqueous caprolactam solution, it may act to reduce the cyclic oligomer content of the polyamide prepolymer, to shorten the polymerization time, and even to reduce the oligomer content of the polyamide. The blend ratio of the component is preferably from 0.05 to 5 mol% relative to the caprolactam, more preferably from 0.07 to 4 mol%, most preferably from 0.1 to 3 mol%. If the blend ratio of the component is over 5 mol%, it causes some problems in that the degree of polymerization of the polyamide polymer obtained is low, the melting point and the crystallinity thereof are low, the shapability thereof is poor, and the physical properties of the shaped products are not good; but if lower than 0.05 mol%, it is not effective for reducing the cyclic oligomers in the polyamide prepolymer and in the polyamide.

In the method of producing the polyamide prepolymer according to the invention, it is necessary that the heat treatment is effected under pressure at a temperature of from 200 to 330°C for 1 to 30 minutes.

In this state, the pressure is enough for preventing the water evaporation from
the system. It falls between 0.111 and 6.08 MPa (between 1.1 and 60 atm, or between 1.14 and 62.00 kg/cm²), more preferably between 0.152 and 5.065 MPa (between 1.5 and 50 atm, or between 1.55 and 51.67 kg/cm²). If under a pressure of lower than 0.111MPa, the efficiency of amino group formation in prepolymerization will lower, and therefore the oligomer amount in the polyamide prepolymer will increase until the prepolymer could have a desired amino group content; but if under a pressure of higher than 6.08 MPa, the productivity is low and it is uneconomical.

In preparing the polyamide prepolymer in the invention, the processing temperature range falls between 200 and 330°C. The lowermost limit of the processing temperature is preferably 205°C, more preferably 210°C, most preferably 250°C. The uppermost limit of the processing temperature is preferably 325°C, more preferably 320°C, most preferably 315°C. If the processing temperature is lower than 200°C, the cyclic oligomer content of the prepolymer is large at the time when the prepolymer has the necessary amino group content; but if higher than 330°C, the amino group in the reaction product is difficult to control and the process loses industrial stability.

The processing time in preparing the polyamide prepolymer in the invention is in a range of from 1 to 30 minutes. The uppermost limit of the time is preferably at most 25 minutes, more preferably at most 20 minutes. If the time is over 30 minutes , the cyclic oligomer content of the reaction product will increase; but if shorter than 1 minute, the amino group content of the reaction product fluctuates and the degree of polymerization of the polyamide to be produced in the subsequent polymerization step will be difficult to control.

The polyamide prepolymer obtained in the method of the invention has an amino group content of at least 0.1 mmol/g, more preferably at least 0.15 mmol/g, even more preferably at least 0.2 mmol/g. If it is smaller than 0.1 mmol/g, the oligomer content of the polyamide to be produced from the polyamide prepolymer will increase. The uppermost limit of the amino end group content of the prepolymer is not specifically defined. In view of the productivity, however, it may be generally at most 1.0 mmol/g. The cyclic oligomer content of the prepolymer is at most 0.6 % by weight, preferably at most 0.4 % by weight, more preferably at most 0.3% by weight. If it is over 0.6% by weight, the oligomer content of the polyamide polymer to be obtained from the polyamide prepolymer increases. The lowermost limit of the cyclic oligomer content is not specifically defined, but is generally 0.01 % by weight.

At the time when it has been produced through melt polymerization within a period of 20 hours, the polyamide of the invention must satisfy the characteristics in that the relative viscosity measured in sulfuric acid thereof is 2.0 to 8.0, the unreacted caprolactam content thereof is at most 15 % by weight, the oligomer content thereof is at most 1.8% by weight, the total content of cyclic di to tetramers therein is at most 0.9 % by weight. Satisfying the requirements, the polyamide produced has a high quality and its productivity is high.

The relative viscosity measured in sulfuric acid of the polyamide of the invention is at least 2.0, in terms of the relative viscosity of a sample of the polymer having a concentration of 0.01 g/ml in 98 % sulfuric acid at 25°C. More preferably, it is from 2.05 to 7.0, even more preferably from 2.1 to 6.5, most preferably from 2.15 to 6.0. If the relative viscosity is smaller than 2.0, the mechanical properties of the polyamide are unsatisfactory; but if larger than 8.0, the melt viscosity of the polymer is too high and the polymer will be difficult to
shape.

The polyamide of the invention, which is finally obtained herein, has an unreacted caprolactam content of at most 15 % by weight, preferably at most 13 % by weight, more preferably at most 11 % by weight. If it is larger than 15 % by weight, the time and the energy necessary for hot water extraction of the polymer will increase. The lowermost limit of the caprolactam content is not defined but is generally about 3 % by weight or so.

The polyamide of the invention, which is finally obtained herein, has an oligomer content of at most 1.8 % by weight, preferably at most 1. 5 % by weight, more preferably at most 1.3% by weight. If it is larger than 1.8 % by weight, the time to be taken for hot water extraction will increase and the oligomer content of the polymer after evaporation removal of caprolactam and oligomer will therefore increase. The lowermost limit of the oligomer content is not defined but is generally about 0.6% by weight or so.

In the polyamide of the invention, which is finally obtained herein, the total content of the cyclic di to tetramers is at most 0.9 % by weight, preferably at most 0.85 % by weight, more preferably at most 0.8 % by weight. If it is larger than 0.9 % by weight, the time to be taken for hot water extraction will increase and the oligomer content of the polymer after evaporation removal of caprolactam and oligomer will therefore increase. The lowermost limit of the total of the cyclic di to tetramers in the polymer is not defined but is generally about 0.2 % by weight or so.

In the method of producing the polyamide of the invention, caprolactam may be further added to the polyamide prepolymer at the start of polymerization. The amount of the additional caprolactam is not specifically defined provided that the amino group content of the startingmaterial composition that comprises the polyamide prepolymer and the additional caprolactam is 0.1 mmol/g or more.

In the method of producing the polyamide of the invention, at most 5 mol%, relative to the caprolactam in the starting material before heat treatment, of at least one additive selected from dicarboxylic acids, diamines and their salts may be fed into a normal pressure polymerization device. The additive makes it possible to further shorten the necessary polymerization time and to further reduce the oligomer content of the polyamide polymer produced. However, the amount of the additive is preferably at most 4 mol%, more preferably at most 3 mol%. If the amount of the additive is over 5 mol%, the melting point and the crystallinity of the polyamide polymer obtained will lower, and the shapability of the polymer will be poor and the physical properties of the shaped articles of the polymer will be also poor.

The dicarboxylic acids for the additive include aliphatic dicarboxylic acids such as oxalic acid, malonic acid, succinic acid, glutaric acid, adipic acid, pimelic acid, suberic acid, azelaic acid, sebacic acid, undecane-diacid, dodecane-diacid, brassylic acid, tetradecane-diacid, pentadecane-diacid, octadecane-diacid; alicyclic dicarboxylic acids such as cyclohexanedicarboxylic acid; and aromatic dicarboxylic acids such as phthalic acid, isophthalic acid, terephthalic acid, naphthalenedicarboxylic acid.

The diamines for the additive include aliphatic diamines such as 1,4-diaminobutane, 1,5-diaminopentane, 1,6-diaminohexane, 1,7-diaminoheptane, 1,8-diaminooctane, 1,9-diaminononane, 1,10-diaminodecane, 1,11-diaminoundecane, 1,12-diaminododecane, 1,13-diaminotridecane, 1,14-diaminotetradecane, 1,15-diaminopentadecane, 1,16-diaminohexadecane, 1,17-diaminoheptadecane, 1,18-diaminooctadecane, 1,19-diaminononadecane, 1,20-diaminoeicosane, diethylaminopropylamine; alicyclic diamines such as cyclohexanediamine, bis (4-aminohexyl) methane; and aromatic diamines such as xylylenediamine.

For the additive, preferred are salts of dicarboxylic acids and diamines; more preferred are salts derived from aliphatic and/or aromatic dicarboxylic acids and aliphatic diamines; and most preferred are a salt derived from adipic acid and hexamethylenediamine and/or a salt derived from terephthalic acid and hexamethylenediamine.

The mode of adding the additive to the atmospheric pressure polymerization device is not specifically defined. A granular solid may be added to the polymerization device, or it may be dissolved in a solvent such as water and the resulting solution may be added thereto.

In producing the polyamide of the invention, it is desirable that the reaction product intermediate prepared is polymerized under atmospheric pressure.

In the method of producing the polyamide of the invention, the polymerization device to be used is not specifically defined, and any ordinary device generally used in caprolactam polymerization may be used. Concretely, it includes liquid-phase polymerization devices such as continuous atmospheric pressure polymerization devices, batchwise polymerization devices, etc. In view of the productivity, preferred are continuous normal pressure polymerization devices.

In the method of producing the polyamide of the invention, polymerization temperature condition is so controlled that the highest polymerization temperature is not higher than the melting point of the polyamide to be obtained + 10°C, but preferably not higher than the melting point of the polymer. If the highest polymerization temperature during the polymerization process is higher than the melting point of the polyamide + 10°C, the oligomer content of the polyamide obtained will increase; but if the polymerization temperature is too low, the time to be taken for the polymerization will be long and the productivity will lower. Accordingly, it is desirable that the polymerization temperature falls within a range of from 160 to 232°C, more preferably from 170 to 222°C, even more preferably from 180 to 220°C. The melting point of the polyamide is defined as follows: From the polyamide obtained, caprolactam, oligomer and others are removed through hot water extraction, and then, the polyamide is melted and thereafter rapidly cooled. The thus-prepared sample of the polymer is analyzed by the use of a differential scanning calorimeter (DSC) at a heating rate of 20°C/min. Based on the crystal fusion in the analysis, the peak top temperature of endothermic peak of the sample indicates the melting point of the polymer.

Satisfying the above-mentioned condition, the polymerization temperature profile may be determined in any ordinary manner. In the method of producing the polyamide of the invention, the polymerization time is within 20 hours, preferably within 18 hours, more preferably within 16 hours. If it is longer than 20 hours , the practical value of the invention will lower in point of the production efficiency.

In the method of producing the polyamide of the invention, the water content of the starting material to be fed into a normal pressure polymerization device is not defined, but is preferably at most 4 % by weight. If it is over 4 % by weight, much calorie will be needed for heating the system to produce the polyamide and the productivity will lower.

In the method of producing the polyamide polymer of the invention, the polyamide prepolymer that is obtained in hot pressure treatment is fed into a normal pressure polymerization device. In this stage, it is desirable that the reaction matter after the hot pressure treatment is flashed at the top of the polymerization device to evaporate and remove water from it. The evaporation removal of water makes it possible to reduce the calorie necessary for heating the reaction system to produce the polyamide and to facilitates the polymerization temperature control.

In the method of producing the polyamide polymer of the invention, caprolactam and oligomer may be removed from the obtained polyamide through hot water extraction or through evaporation by heating under reduced pressure, or after caprolactam and oligomer have been removed from the polymer product under heat under reduced pressure, the remaining polymer may be further subjected to hot water extraction.

The evaporation removal of caprolactam and oligomer from the polymer product under heat under reduced pressure may be effected in a solid phase, for example, after the polymerization reaction product has been solidified into pellets or the like, or may be effected in a melt condition. The evaporation removal of the impurities in a melt condition may be effected as follows : The polymerization reaction product is solidified into pellets or the like, and then they are melted under heat under reduced pressure in an extruder, a thin film evaporator or the like; or the polymerization reaction product in melt that is jetted out from the polymerization tower may be directly fed into an extruder, a thin film evaporator or the like.

While caprolactam and oligomer are removed from the polymerization product under heat under reduced pressure, the degree of polymerization of the polymer product, polyamide may be controlled to a desired value that is suitable to its use.

In case where the polyamide obtained in the production method of the invention is required to have a high viscosity suitable for extrusion, it is desirable that the polyamide is specifically processed in a solid-phase reduced pressure treatment of heating it at a temperature lower than the melting point of the polyamide and under reduced pressure so that the thus-processed polyamide may have a suitable viscosity and have a desired degree of polymerization.

In the method of producing the polyamide of the invention, if desired, the polymer product may be end-capped with a carboxylic acid compound. In case where the polymer is end-capped with a monocarboxylic acid added thereto, the end group concentration of the resulting polyamide resin is lower than that of the non-end-capped resin. On the other hand, in case where the polymer is end-capped with a dicarboxylic acid, the overall end group concentration does not vary, but the ratio of the amino end group to the carboxyl end group in the resulting polyamide resin may be varied. Examples of the carboxylic acids for end-capping are aliphatic monocarboxylic acids such as acetic acid, propionic acid, butyric acid, valeric acid, caproic acid, enanthic acid, caprylic acid, pelargonic acid, undecanoic acid, lauric acid, tridecanoic acid, myristic acid, myristoleic acid, palmitic acid, stearic acid, oleic acid, linolic acid, arachic acid; alicyclic monocarboxylic acids such as cyclohexanecarboxylic acid, methylcyclohexanecarboxylic acid; aromatic monocarboxylic acids such as benzoic acid, toluic acid, ethylbenzoic acid, phenylacetic acid; aliphatic dicarboxylic acids such as oxalic acid, malonic acid, succinic acid, glutaric acid, adipic acid, pimelic acid, suberic acid, azelaic acid, sebacic acid, undecane-diacid, dodecane-diacid, brassylic acid, tetradecane-diacid, pentadecane-diacid, octadecane-diacid; alicyclic dicarboxylic acids such as cyclohexanedicarboxylic acid; aromatic dicarboxylic acids such as phthalic acid, isophthalic acid, terephthalic acid, naphthalenedicarboxylic acid.

For adding the end-capping agent to the polymer, for example, employable is any of a method of adding it along with a starting material such as caprolactam in the initial stage of heating the polyamide prepolymer; a method of adding it during the heat treatment; a method of adding it after the heat treatment but before the prepolymer is fed into a normal pressure polymerization device; or a method of adding it while unreacted caprolactam and oligomer are removed from the polyamide resin in melt. The end-capping agent may be added directly as it is, but may be dissolved in a small amount of a solvent and the resulting solution may be added.

In the production method of the invention, if desired, any additive may be added to the system in any desired stage in accordance with the use of the polymer to be obtained. For example, the additive includes antioxidants and heat-resistant stabilizers (e.g., hindered phenols, hydroquinones, phosphites and their substituted derivatives, copper halides, iodine compounds), weather-resistant agents (e.g., resorcinols, salicylates, benzotriazoles, benzophenones, hindered amines), mold release agents and lubricants (e.g., aliphatic alcohols, aliphatic amides, aliphatic bisamides, bisurea, polyethylene wax), pigments (e.g., cadmium sulfide, phthalocyanine, carbon black), dyes (nigrosine, aniline black), nucleating agents (e.g., talc, silica, kaolin, clay), plasticizers (e.g., octyl p-oxybenzoate, N-butylbenzenesulfonamide), antistatic agents (e.g., alkylsulfates, anionic antistatic agents, quaternary ammonium salt-type cationic antistatic agents, nonionic antistatic agents such as polyoxyethylene sorbitan monostearate, betaine-type ampholytic antistatic agents), flame retardants (e.g., melamine cyanurate, hydroxides such as magnesium hydroxide and aluminium hydroxide, polyammonium phosphate, polystyrene bromides, polyphenylene oxide bromides, polycarbonate bromides, epoxy resin bromides, and combinations of these bromine-containing flame retardants and antimony trioxide), fillers (e.g. , granular, fibrous, acicular or tabular fillers such as graphite, barium sulfate, magnesium sulfate, calcium carbonate, magnesium carbonate, antimony oxide, titanium oxide, aluminium oxide, zinc oxide, iron oxide, zinc sulfide, zinc, lead, nickel, aluminium, copper, iron, stainless, glass fibers, carbon fibers, aramid fibers, bentonite, montmorillonite, synthetic mica), other polymers (e.g., other polyamides, polyethylenes, polypropylenes, polyesters, polycarbonates, polyphenylene ethers, polyphenylene sulfides, liquid-crystal polymers, polysulfones, polyether sulfones, ABS resins, SAN resins, polystyrenes).

The polyamide obtained according to the production method of the invention may be shaped into shaped articles in any ordinary shaping methods, line ordinary polyamides. The shaping method for the polymer is not specifically defined, and may be any known one including, for example, injection molding, extrusion, blow molding, pressing, etc. The shaped articles as referred to herein include not only molded articles in the narrow sense of the word such as those formed through injection molding or the like, but also other various shaped articles such as fibers, films, sheets, tubes, monofilaments, etc.

### EXAMPLES

The invention is described concretely with reference to the following Examples. The samples in the Examples and the Comparative Examples were analyzed and measured according to the methods mentioned below.

### (1) Amino group content of polyamide prepolymer:

About 0. 2 g of a sample to be measured is accurately weighed, and dissolved in 25 cc of a mixed solvent of phenol/ethanol (83.5/16.5 by volume), and the resulting solution is titered against an aqueous 0.02 N hydrochloric acid solution.

### (2) Cyclic oligomer content of polyamide prepolymer:

A sample to be measured is ground and classified through JIS standard sieves. Powder having passed through a 24-mesh sieve but not through a 124-mesh sieve is collected. About 20 g of the powder is extracted with 200 ml of methanol for 3 hours, by the use of a Soxhlet extractor. The cyclic oligomer in the resulting extract is quantified through high-performance liquid chromatography. In the following Examples, no cyclic oligomer not smaller than heptamers was detected. The condition for measurement is mentioned below.
High-performance liquid chromatograph: Waters' 600E, Column: GL Sciences' ODS-3,
Detector: Waters' 484 Tunable Absorbance Detector, Detection wavelength: 254 nm,
Injection volume: 10 µl,
Solvent: methanol/water (for methanol/water gradient analysis of from 20/80 to 80/20),
Flow rate: 1 ml/min.

### (3) Water content of polyamide prepolymer:

Measured by the use of a moisture microanalyzer, Hiranuma Sangyou's AQ-6.

### (4) Caprolactam content of polyamide:

A polyamide sample to be measured is ground and classified through JIS standard sieves. Polyamide powder having passed through a 24-mesh sieve but not through a 124-mesh sieve is collected. About 20 g of the powder is extracted with 200 ml of methanol for 3 hours, by the use of a Soxhlet extractor. The caprolactam in the resulting extract is quantified through high-performance liquid chromatography. The condition for measurement is mentioned below.
High-performance liquid chromatograph: Waters' 600E,
Column: GL Sciences' ODS-3,
Detector: Waters' 484 Tunable Absorbance Detector,
Detection wavelength: 254 nm,
Injection volume: 10 µl,
Solvent: methanol/water (20/80 by volume),
Flow rate: 1 ml/min.

### (5) Cyclic di to tetramer content of polyamide:

A polyamide sample to be measured is ground and classified through JIS standard sieves. Polyamide powder having passed through a 24-mesh sieve but not through a 124-mesh sieve is collected. About 20 g of the powder is extracted with 200 ml of methanol for 3 hours, by the use of a Soxhlet extractor. The cyclic di to tetramers in the resulting extract are quantified through high-performance liquid chromatography. The condition for measurement is mentioned below.
High-performance liquid chromatograph: Waters' 600E,
Column: GL Sciences' ODS-3,
Detector: Waters' 484 Tunable Absorbance Detector,
Detection wavelength: 254 nm,
Injection volume: 10 µl,
Solvent: methanol/water (20/80 by volume),
Flow rate: 1 ml/min.

### (6) Oligomer content of polyamide:

A polymerization reaction product sample to be measured is ground and classified through JIS standard sieves. Polyamide powder having passed through a 24-mesh sieve but not through a 124-mesh sieve is collected. About 20 g of the powder is extracted with 200 ml of methanol for 3 hours, by the use of a Soxhlet extractor. The caprolactam in the resulting extract is quantified according to the method mentioned above. Then, the extract is evaporated into a solid by the use of an evaporator, and dried in vacuum at 80°C for 8 hours, and the resulting residue is collected and weighed. This is the oligomer content of the polymer.

### (7) Relative viscosity measured in sulfuric acid (ηr):

Measured in 98 % sulfuric acid at 25°C by the use of an Ostwald viscometer. The sample concentration is 0.01 g/ml.

### Reference Example (preparation of starting material to be used) :

A special-grade caprolactam was obtained from Tokyo Chemical Industry. This was dried with molecular sieve. Special-grade hexamethylenediamine, terephthalic acid and adipic acid were obtained from Tokyo Chemical Industry, and these were used as they were. Adipic acid hexamethylenediamine salt, and terephthalic acid hexamethylenediamine salt that were used in the Examples and Comparative Examples were prepared as follows: The above-mentioned diamine and dicarboxylic acid were dissolved in an equimolar ratio in hot water, and then cooled. The deposited crystal was taken out through filtration, and dried in vacuum at 80°C for 8 hours.

### Examples 1 to 10, Comparative Examples 1 to 3 (heat treatment, and atmospheric pressure continuous polymerization):

Using the apparatus of Fig. 1, heat treatment and normal pressure continuous polymerization were carried out. An aqueous caprolactam solution having the composition as in Table 1 and Table 2 was put into the starting material tank 1, and then this was fed into the pressure heating tank 4 by the action of the raw material feeding pump 2 equipped with the pressure gauge 3. In the tank 4, the material was continuously heated and processed under the condition indicated in Table 1 and Table 2. Next, the thus-obtained polyamide prepolymer was transferred into the atmospheric pressure continuous polymerization tower 7, and flashed at the top of the tower to evaporate and remove water. Then, this was polymerized under the condition indicated in Table 1 and Table 2, and a polymerization product, polyamide was thus obtained. If desired, various additives in the form of powder were added through the top of the polymerization tower. The pressure in the pressure heat treatment was controlled by varying the aperture of the pressure control valve 5 disposed in the way of the flow line. To analyze it during the process , the polyamide prepolymer was sampled through the sample take-out mouth 6 before it was transferred into the atmospheric pressure continuous polymerization tower 7, and the thus-collected sample was analyzed. The results are given in Table 1 and Table 2. As is obvious from comparison between Examples 1 to 10 and Comparative Examples 1 to 3, the polyamide polymers obtained according to the production method of the invention all have a reduced unreacted caprolactam amount and a reduced oligomer amount. In particular, the oligomer amount in these was significantly reduced. Further, when a nylon salt was added to the polymerization tower through its top, the oligomer amount in the polymer produced was much more reduced.

**Table 1**

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Heat Treatment | Starting Material Composition | starting material | caprolactam | caprolactam | caprolactam | caprolactam | caprolactam | caprolactam | caprolactam | caprolactam | caprolactam | caprolactam |
| | | water content (wt.%) | 12 | 10 | 3 | 18 | 12 | 12 | 12 | 2.4 | 10 | 10 |
| | Additive | type | no | no | no | no | no | no | no | no | 1,6-diamino-hexane | terephthalic acid |
| | | amount added (mol%) | | | | | | | | 0.3 | 0.3 | 0.3 |
| | Heat Treatment Condition | pressure (MPa) | 2.98 | 3.92 | 2.25 | 4.21 | 2.98 | 2.98 | 2.98 | 2.3 | 3.0 | 3.0 |
| | | reaction temperature (°C) | 280 | 300 | 320 | 250 | 280 | 280 | 280 | 320 | 280 | 260 |
| | | reaction time (min) | 8 | 5 | 8 | 14 | 8 | 8 | 8 | 11 | 6 | 6 |
| | Nylon 6 Prepolymer Properties after heat treatment | amino group content (mmol/g) | 0.33 | 0.49 | 0.14 | 0.36 | 0.33 | 0.33 | 0.33 | 0.12 | 0.32 | 0.50 |
| | | cyclic oligomer content (wt.%) | 0.20 | 0.40 | 0.58 | 0.52 | 0.20 | 0.20 | 0.20 | 0.58 | 0.04 | 0.30 |
| | | water content (wt.%) | 1.9 | 1.6 | 0.9 | 2.1 | 1.9 | 1.9 | 1.9 | 0.9 | 1.0 | 1.6 |
| Polymerization | Additive | type | no | no | no | no | no | adipic acid/1,6 -diaminohexane salt | terephthalic acid/,6-diaminohe xane salt | no | no | no |
| | | amount added (wt.%) | | | | | | 2 | 2 | | | |
| | Polymerization Condition | polymerization temperature profile | 195°C (6 h) | 190°C (5 h) | 200°C (10 h) | 195°C (5 h) | 195°C (6 h) | 190°C (4 h) | 190°C (3 h) | 200°C (10 h) | 195°C (6 h). | 190°C (5 h) |
| | | | 220°C (4 h) | 220°C (1h) | 220°C (8 h) | 220°C (4 h) | 225°C (3 h) | 220°C (1 h) | 220°C (1 h) | 220°C (9 h) | 220°C (4 h) | 220°C (1 h) |
| | | overall polymerization time (hrs) | 10 | 6 | 18 | 9 | 9 | 5 | 4 | 19 | 10 | 6 |
| | Nylon 6 Polymer Properties | ηr | 2.51 | 2.30 | 2.35 | 2.40 | 2.53 | 2.25 | 2.15 | 2.43 | 2.42 | 2.30 |
| | | caprolactam content (wt.%) | 7.5 | 9.8 | 10.1 | 8.4 | 7.3 | 9.5 | 9.2 | 14.0 | 8.3 | 9.2 |
| | | total content of cyclic di to tetramers (wt.%) | 0.54 | 0.63 | 0.87 | 0.67 | 0.58 | 0.49 | *0.47* | 0.88 | 0.44 | 0.55 |
| | | oligomer content (wt.%) | 0.95 | 1.10 | 1.71 | 1.20 | 1.05 | 0.83 | 0.80 | 1.74 | 0.78 | 0.98 |

**Table 2**

| | | | Comp. Ex. 1 | Comp. Ex. 2 | Comp. Ex. 3 |
|---|---|---|---|---|---|
| Heat | Starting Material Composition | starting material | caprolactam | caprolactam | caprolactam |
| Treatment | | water content (wt.%) | 12 | 3 | 2 |
| | Heat Treatment Condition | pressure (MPa) | 0.101 (normal pressure) | no heat treatment | 2.30 |
| | | reaction temperature (°C) | 260 | | 270 |
| | | reaction time (min) | 7 | | 45 |
| | Nylon 6 Prepolymer Properties after heat treatment | amino group content (mmol/g) | 0 | | 0.17 |
| | | cyclic oligomer content (wt.%) | 0 | | 2.00 |
| | | water content (wt.%) | 1.9 | | 1.1 |
| Polymerization | Additive | | no | no | no |
| | Polymerization Condition | polymerization temperature profile | 200°C (20 h) | 200°C (20 h) | 200°C (8 h) |
| | | | 220°C (22 h) | 220°C (21 h) | 220°C (6 h) |
| | | overall polymerization time (hrs) | 42 | 41 | 14 |
| | Nylon 6 Polymer Properties | ηr | 2.30 | 2.35 | 2.48 |
| | | caprolactam content (wt.%) | 15.1 | 14 | 9.6 |
| | | total content of cyclic di to tetramers (wt.%) | 1.22 | 1.19 | 1.62 |
| | | oligomer content (wt.%) | 2.30 | 2.25 | 3.10 |

### Examples 11 to 13, Comparative Example 4 (melting evaporation removal of unreacted caprolactam and oligomer):

From the polyamide obtained in any of Examples 1 to 10 or Comparative Examples 1 to 3, caprolactam and oligomer were removed through melting evaporation. A 30-mmφ, vented twin-screw extruder (by The Japan Steel Works) was used, and the condition for the melting evaporation removal with it was as follows:
L/D = 45.5, one-direction rotation, deep grooves,
Barrel temperature: 160/240/250/260/260/260/260/250/250°C from the starting material feeding side,
Degassing for reduced pressure: 133 Pa (1 Torr) from 2nd, 4th and 6th zones,
Number of revolution: 200 rpm.

The results are given in Table 3. The results confirm that, according to the method of the invention, the caprolactam content and the oligomer content of the polyamides were both reduced. Concretely, the unreacted caprolactam content was at most 0.05 % by weight, and the oligomer content was at most 0.99% by weight.

**Table 3**

| | | Example 11 | Example 12 | Example 13 | Comparative Example 4 |
|---|---|---|---|---|---|
| Sample | | polyamide of Example 1 | polyamide of Example 4 | polyamide of Example 6 | polyamide of polyamide Comparative Example 1 |
| Properties before melting evaporation removal | ηr | 2.51 | 2.40 | 2.25 | 2.30 |
| | caprolactam content (wt.%) | 7.5 | 8.4 | 9.5 | 15.1 |
| | oligomer content (wt.%) | 0.95 | 1.20 | 0.83 | 2.30 |
| Properties after melting evaporation removal | ηr | 2.72 | 2.65 | 2.50 | 2.57 |
| | caprolactam content (wt.%) | 0.04 | 0.05 | 0.04 | 0.09 |
| | oligomer content (wt.%) | 0.75 | 0.99 | 0.64 | 2.15 |

### Examples 14 to 16, Comparative Example 5 (solid-phase evaporation removal of unreacted caprolactam and oligomer):

From the polyamide obtained in any of Examples 1 to 10 or Comparative Examples 1 to 3, caprolactam and oligomer were removed through solid-phase evaporation. A 3L rotary reduced-pressure solid-phase polymerization device was used, and the polymer was processed therein under 133 Pa (1 Torr) at 150°C for 6 hours for solid-phase evaporation removal of impurities from it. The results are given in Table 4. As in this, the caprolactam content and the oligomer content of the polyamides obtained according to the invention were both low. Concretely, the unreacted caprolactam content was at most 0.08 % by weight, and the oligomer content was at most 1.10 % by weight.

**Table 4**

| | | Example 14 | Example 15 | Example 16 | Comparative Example 5 |
|---|---|---|---|---|---|
| Sample | | polyamide of Example 2 | polyamide of Example 4 | polyamide of Example 7 | polyamide of Comparative Example 1 |
| Properties before solid-phase evaporation removal | ηr | 2.30 | 2.40 | 2.15 | 2.30 |
| | caprolactam content (wt.%) | 9.8 | 8.4 | 9.2 | 15.1 |
| | oligomer content (wt.%) | 1.10 | 1.20 | 0.80 | 2.30 |
| Properties after solid-phase evaporation removal | ηr | 2.82 | 2.98 | 2.70 | 2.94 |
| | caprolactam content (wt.%) | 0.07 | 0.08 | 0.08 | 0.08 |
| | oligomer content (wt.%) | 0.99 | 1.10 | 0.70 | 2.23 |

### Examples 17 and 18, Comparative Example 6 (hot water extraction removal of unreacted caprolactam and oligomer):

From the polyamide obtained in any of Examples 1 to 10 or Comparative Examples 1 to 3, caprolactam and oligomer were removed through hot water extraction. For the extraction, used were cylindrical pellets of the polyamide resin (having a diameter of about 2 mm and a length of about 3 mm). The extraction condition is mentioned below.
Extraction solvent: water,
Extraction bath ratio: polyamide/water = 1/20,
Extraction temperature: 98°C.

The extraction time taken for reducing the unreacted caprolactam content of the polymerization reaction product to at most 0.05 % by weight and for reducing the oligomer content thereof to at most 1.0 % by weight was measured.

The results are given in Table 5. Analyzing the extraction time taken by the samples tested herein, it is understood that the polyamides obtained according to the production method of the invention took a shorter extraction time.

**Table 5**

| | | Example 17 | Example 18 | Comparative Example 6 |
|---|---|---|---|---|
| Sample | | polyamide of Example 1 | polyamide of Example 4 | polyamide of Comparative Example 3 |
| Properties before extraction | ηr | 2.51 | 2.35 | 2.48 |
| | caprolactam content (wt.%) | 7.5 | 10.1 | 9.6 |
| | oligomer content (wt.%) | 0.95 | 1.71 | 3.10 |
| Extraction Condition | extraction time (hrs) | 5 | 12 | 22 |
| Properties after extraction | ηr | 2.50 | 2.35 | 2.46 |
| | caprolactam content (wt.%) | 0.03 | 0.01 | 0.01 |
| | oligomer content (wt.%) | 0.74 | 0.98 | 1.46 |

In addition, the polyamides of Examples 9 to 14 were injection-molded and their handlability was checked. As a result, they were all on a level with ordinary polymers.

### INDUSTRIAL APPLICABILITY

According to the production method of the invention, polyamide can be obtained in which the unreacted caprolactam and oligomer have been reduced. The polyamide does not require hot water extraction, or the time for hot water extraction thereof can be reduced. The invention enables efficient production of polyamide resin at low energy costs, and its utility value in industry is high.

## Claims

1. A method for producing a polyamide prepolymer, which method comprises heating an aqueous solution of caprolactam having a water content of from 2 to 20 % by weight, under pressure which is sufficient to prevent the water evaporation from the system and is between 0.111 and 6.08MPa, at a temperature of from 200 to 330°C for 1 to 30 minutes, to provide a polyamide prepolymer having an amino group content of at least 0.1 mmol/g and a cyclic oligomer content of at most 0.6 % by weight.

2. A method according to claim 1, which comprises heating the aqueous solution of caprolactam and water at a pressure between 0.152 and 5.065 MPa.

3. A method according to claim 1 or 2, which comprises heating the aqueous solution of caprolactam and water for no longer than 25 minutes.

4. A method according to any preceding claim, which comprises the preliminary step of mixing an aqueous solution of caprolactam having a water content of from 2 to 20 % by weight with from 0.05 to 5 mol%, relative to the caprolactam, of at least one component selected from dicarboxylic acids, diamines and their salts, followed by performing the said heating step on the resulting mixture.

5. A method according to any one of claims 1 to 4, wherein the polyamide prepolymer produced has an amino group content of at least 0.15 mmol/g and a cyclic oligomer content of at most 0.4 % by weight.

6. A method for producing a polyamide that has caproamide units as the essential constitutive component and has a relative viscosity in 98% sulphuric acid at 25°C at a concentration of 0.01g/ml of 2.0 to 8.0, a caprolactam content of at most 15 % by weight, an oligomer content of at most 1.8 % by weight and a total content of cyclic di- to tetramers of at most 0.9 % by weight; the method being **characterized in that** a polyamide prepolymer, which is obtained through heat treatment of an aqueous solution of caprolactam having a water content of from 2 to 20 % by weight under pressure which is sufficient to prevent the water evaporation from the system and is between 0.111 and 6.08MPa at a temperature of from 200 to 330°C for 1 to 30 minutes, and has an amino group content of at least 0.1 mmol/g and a cyclic oligomer content of at most 0.6 % by weight, is fed into an atmospheric pressure polymerization device and is polymerized therein under such a controlled condition that the highest polymerization temperature is not higher than the melting point of the polyamide to be obtained + 10°C and the polymerization time is not longer than 20 hours.

7. A method according to claim 6, wherein, in the method of obtaining the polyamide prepolymer, an aqueous solution of caprolactam having a water content of from 2 to 20 % by weight is mixed with from 0.05 to 5 mol%, relative to the caprolactam, of at least one component selected from dicarboxylic acids, diamines and their salts, followed by performing the heating step on the resulting mixture.

8. A method according to claim 6, wherein each of the polyamide prepolymer and at most 5 mol%, relative to the caprolactam, of at least one additive selected from dicarboxylic acids, diamines and their salts are fed into the atmospheric pressure polymerization device.

9. A method according to any one of claims 6 to 8, wherein the highest polymerization temperature is not higher than the melting point of the polyamide to be obtained.

10. A method according to claim 8 or 9, wherein the additive is a salt of a dicarboxylic acid and a diamine.

11. A method according to claim 10, wherein the salt of a dicarboxylic acid and a diamine is a salt derived from a dicarboxylic acid selected from aliphatic dicarboxylic acids and aromatic dicarboxylic acids, and an aliphatic diamine.

12. A method according to claim 11, wherein the dicarboxylic acid that constitutes the salt of a dicarboxylic acid and a diamine is a dicarboxylic acid selected from adipic acid and terephthalic acid, and the diamine is hexamethylenediamine.

13. A method according to any one of claims 6 to 8, wherein the water content of the polyamide prepolymer to be fed into the atmospheric pressure polymerization device is at most 4 % by weight.

14. A method according to any one of claims 6 to 8, wherein the polyamide prepolymer is, before it is fed into the normal pressure polymerization device, flashed at the top of the device to evaporate and remove water from it.

15. A method according to any one of claims 6 to 8, wherein the atmospheric pressure polymerization device is a continuous atmospheric pressure polymerization device.

## Patentansprüche

1. Verfahren zur Herstellung eines Polyamidpräpolymers, wobei das Verfahren Folgendes umfasst: das Erhitzen einer wässrigen Lösung von Caprolactam mit einem Wassergehalt von 2 bis 20 Gew.-% unter Druck, der ausreicht, um Wasserverdampfung aus dem System zu verhindern, und zwischen 0,111 und 6,08 MPa liegt, bei einer Temperatur von 200 bis 330 °C 1 bis 30 min lang zur Bereitstellung eines Polyamidpräpolymers mit einem Gehalt an Aminogruppen von zumindest 0,1 mmol/g und einem Gehalt an zyklischen Oligomeren von maximal 0,6 Gew.-%.

2. Verfahren nach Anspruch 1, das das Erhitzen der wässrigen Lösung von Caprolactam und Wasser bei einem Druck zwischen 0,152 und 5,065 MPa umfasst.

3. Verfahren nach Anspruch 1 oder 2, das das Erhitzen der wässrigen Lösung von Caprolactam und Wasser für nicht länger als 25 min umfasst.

4. Verfahren nach einem der vorangegangenen Ansprüche, das einen vorausgehenden Schritt des Mischens einer wässrigen Caprolactamlösung mit einem Wassergehalt von 2 bis 20 Gew.-% mit 0,05 bis 5 Mol-%, bezogen auf Caprolactam, zumindest einer Komponente, die ausgewählt ist aus Dicarbonsäuren, Diaminen und ihren Salzen, gefolgt von der Durchführung des Schritts des Erhitzens des resultierenden Gemischs umfasst.

5. Verfahren nach einem der Ansprüche 1 bis 4, worin das erzeugte Polyamidpräpolymer einen Gehalt an Aminogruppen von zumindest 0,15 mmol/g und einen Gehalt an zyklischen Oligomeren von maximal 0,4 Gew.-% aufweist.

6. Verfahren zur Herstellung eines Polyamids, das Folgendes aufweist: Caproamid-Einheiten als Grundbausteine und in 98 % Schwefelsäure bei 25 °C bei einer Konzentration von 0,01 g/ml eine relative Viskosität von 2,0 bis 8,0, einen Caprolactam-Gehalt von maximal 15 Gew.-%, einen Oligomer-Gehalt von maximal 1,8 Gew.-% und einen Gesamtgehalt an zyklischen Di- bis Tetrameren von maximal 0,9 Gew.-%; wobei das Verfahren **dadurch gekennzeichnet ist, dass** ein Polyamidpräpolymer, das durch die Wärmebehandlung einer wässrigen Lösung von Caprolactam mit einem Wassergehalt von 2 bis 20 Gew.-% unter Druck, der ausreicht, um das Verdampfen von Wasser aus dem System zu verhindern, und 0,111 bis 6,08 MPa beträgt, bei einer Temperatur von 200 bis 330 °C 1 bis 30 min lang erhalten wird und einen Gehalt an Aminogruppen von zumindest 0,1 mmol/g und einen Gehalt an zyklischen Oligomeren von maximal 0,6 Gew.-% aufweist, einer Polymerisationsvorrichtung unter atmosphärischem Druck zugeführt und in dieser unter derart kontrollierten Bedingungen polymerisiert wird, dass die höchste Polymerisationstemperatur nicht höher ist als der Schmelzpunkt des Polyamids, das erhalten werden soll, + 10 °C und die Polymerisationsdauer nicht mehr als 20 h beträgt.

7. Verfahren nach Anspruch 6, worin in dem Verfahren zum Erhalt eines Polyamidpräpolymers eine wässrige Lösung von Caprolactam mit einem Wassergehalt von 2 bis 20 Gew.-% mit 0,05 bis 5 Mol-%, bezogen auf das Caprolactam, zumindest einer Komponente ausgewählt aus Dicarbonsäuren, Diaminen und deren Salzen gemischt wird, gefolgt von der Durchführung des Schritts des Erhitzens des resultierenden Gemischs.

8. Verfahren nach Anspruch 6, worin jedes der Polyamidpräpolymere und maximal 5 Mol-%, bezogen auf das Caprolactam, zumindest eines Additivs ausgewählt aus Dicarbonsäuren, Diaminen und deren Salzen der Polymerisationsvorrichtung unter atmosphärischem Druck zugeführt werden.

9. Verfahren nach einem der Ansprüche 6 bis 8, worin die höchste Polymerisationstemperatur nicht höher ist als der Schmelzpunkt des Polyamids, das erhalten werden soll.

10. Verfahren nach Anspruch 8 oder 9, worin das Additiv ein Salz einer Dicarbonsäure und eines Diamins ist.

11. Verfahren nach Anspruch 10, worin das Salz einer Dicarbonsäure und eines Diamins ein Salz abgeleitet von einer Dicarbonsäure ausgewählt aus aliphatischen Dicarbonsäuren und aromatischen Dicarbonsäuren und einem aliphatischen Diamin ist.

12. Verfahren nach Anspruch 11, worin die Dicarbonsäure, die das Salz einer Dicarbonsäure und eines Diamins bildet, eine Dicarbonsäure ausgewählt aus Adipinsäure und Terephthalsäure ist und das Diamin Hexamethylendiamin ist.

13. Verfahren nach einem der Ansprüche 6 bis 8, worin der Wassergehalt des Polyamidpräpolymers, das der Polymerisationsvorrichtung unter atmosphärischem Druck zuzuführen ist, maximal 4 Gew.-% beträgt.

14. Verfahren nach einem der Ansprüche 6 bis 8, worin das Polyamidpräpolymer vor dem Zuführen in die Polymerisationsvorrichtung unter normalem Druck oben in der Vorrichtung schnell erhitzt wird, um Wasser aus diesem zu verdampfen und zu entfernen.

15. Verfahren nach einem der Ansprüche 6 bis 8, worin die Polymerisationsvorrichtung unter atmosphärischem Druck eine kontinuierliche Polymerisationsvorrichtung unter atmosphärischem Druck ist.

## Revendications

1. Procédé pour produire un prépolymère de polyamide, lequel procédé comprend le chauffage d'une solution aqueuse de caprolactame ayant une teneur en eau de 2 à 20 % en poids, sous une pression qui est suffisante pour empêcher que l'eau s'évapore du système et qui est comprise entre 0,111 et 6,08 MPa, à une température de 200 à 330°C pendant 1 à 30 minutes, pour former un prépolymère de polyamide ayant une teneur en groupe amino d'au moins 0,1 mmol/g et une teneur en oligomère cyclique d'au plus 0,6 % en poids.

2. Procédé selon la revendication 1, qui comprend le chauffage de la solution aqueuse de caprolactame et d'eau sous une pression comprise entre 0,152 et 5,065 MPa.

3. Procédé selon la revendication 1 ou 2, qui comprend le chauffage de la solution aqueuse de caprolactame et d'eau pendant au plus 25 minutes.

4. Procédé selon l'une quelconque des revendications précédentes, qui comprend l'étape préliminaire de mélange d'une solution aqueuse de caprolactame ayant une teneur en eau de 2 à 20 % en poids avec 0,05 à 5 % en moles, par rapport au caprolactame, d'au moins un composant choisi parmi les acides dicarboxyliques, les diamines et leurs sels, suivie de la mise en oeuvre de ladite étape de chauffage sur le mélange résultant.

5. Procédé selon l'une quelconque des revendications 1 à 4, dans lequel le prépolymère de polyamide produit a une teneur en groupe amino d'au moins 0,15 mmol/g et une teneur en oligomère cyclique d'au plus 0,4 % en poids.

6. Procédé pour produire un polyamide qui a des motifs capramide à titre de composant constitutif essentiel et qui a une viscosité relative, dans de l'acide sulfurique à 98 % à 25°C et à une concentration de 0,01 g/ml, de 2,0 à 8,0, une teneur en caprolactame d'au plus 15 % en poids, une teneur en oligomère d'au plus 1,8 % en poids et une teneur totale en di-à tétramères cycliques d'au plus 0,9 % en poids ; le procédé étant **caractérisé en ce qu'**un prépolymère de polyamide, qui est obtenu par traitement à la chaleur d'une solution aqueuse de caprolactame ayant une teneur en eau de 2 à 20 % en poids, sous une pression qui est suffisante pour empêcher que l'eau s'évapore du système et qui est comprise entre 0,111 et 6,08 MPa, à une température de 200 à 330°C pendant 1 à 30 minutes, et qui a une teneur en groupe amino d'au moins 0,1 mmol/g et une teneur en oligomère cyclique d'au plus 0,6 % en poids, est introduit dans un dispositif de polymérisation sous la pression atmosphérique et y est polymérisé dans des conditions contrôlées telles que la température de polymérisation maximale ne soit pas supérieure au point de fusion du polyamide devant être obtenu + 10°C et que le temps de polymérisation ne dépasse pas 20 heures.

7. Procédé selon la revendication 6, dans lequel, dans le procédé d'obtention du prépolymère de polyamide, une solution aqueuse de caprolactame ayant une teneur en eau de 2 à 20 % en poids est mélangée avec 0,05 à 5 % en moles, par rapport au caprolactame, d'au moins un composant choisi parmi les acides dicarboxyliques, les diamines et leurs sels, opération suivie de la mise en oeuvre de l'étape de chauffage sur le mélange résultant.

8. Procédé selon la revendication 6, dans lequel chacun parmi le prépolymère de polyamide et au plus 5 % en moles, par rapport au caprolactame, d'au moins un additif choisi parmi les acides dicarboxyliques, les diamines et leurs sels, sont introduits dans le dispositif de polymérisation sous la pression atmosphérique.

9. Procédé selon l'une quelconque des revendications 6 à 8, dans lequel la température de polymérisation maximale n'est pas supérieure au point de fusion du polyamide devant être obtenu.

10. Procédé selon la revendication 8 ou 9, dans lequel l'additif est un sel d'un acide dicarboxylique et d'une diamine.

11. Procédé selon la revendication 10, dans lequel le sel d'un acide dicarboxylique et d'une diamine est un sel dérivé d'un acide dicarboxylique choisi parmi les acides dicarboxyliques aliphatiques et les acides dicarboxyliques aromatiques, et d'une diamine aliphatique.

12. Procédé selon la revendication 11, dans lequel l'acide dicarboxylique qui constitue le sel d'un acide dicarboxylique et d'une diamine est un acide dicarboxylique choisi parmi l'acide adipique et l'acide téréphtalique, et la diamine est l'hexaméthylènediamine.

13. Procédé selon l'une quelconque des revendications 6 à 8, dans lequel la teneur en eau du prépolymère de polyamide devant être introduit dans le dispositif de polymérisation sous la pression atmosphérique est d'au plus 4 % en poids.

14. Procédé selon l'une quelconque des revendications 6 à 8, dans lequel le prépolymère de polyamide, avant d'être introduit dans le dispositif de polymérisation sous la pression normale, est soumis à une vaporisation instantanée en haut du dispositif à des fins d'évaporation et d'élimination de l'eau dans celui-ci.

15. Procédé selon l'une quelconque des revendications 6 à 8, dans lequel le dispositif de polymérisation sous la pression atmosphérique est un dispositif de polymérisation sous la pression atmosphérique en continu.
